# FASCICULE DE BREVET EUROPEEN

(11) **EP 0 497 647 B1**
(45) Date de publication et mention de la délivrance du brevet: **26.10.1994**
(21) Numéro de dépôt: 92400119.1
(22) Date de dépôt: 17.01.1992
(51) Int. Cl.: B60T 11/30

(54) **Vis de purge pour circuit hydraulique**
Ablassschraube für hydraulischen Kreislauf
Drain plug for hydraulic circuit

(30) Priorité: 31.01.1991 FR 9101075
(43) Date de publication de la demande: 05.08.1992
(73) Titulaire: ALLIEDSIGNAL EUROPE SERVICES TECHNIQUES, 93700 Drancy (FR)
(72) Inventeur: Muller, Philippe, BENDIX EUROPE SERVICES TECHNIQUE, F-93700 Drancy (FR); Aires, Raphael, BENDIX EUROPE SERVICES TECHNIQUES, F-93700 Drancy (FR)
(74) Mandataire: Bentz, Jean-Paul

(56) Documents cités:
- DE-A- 1 915 461
- FR-A- 2 548 609
- US-A- 3 442 080

## Description

La présente invention a pour objet une vis de purge pour circuit hydraulique, par exemple, pour un circuit de freinage de véhicule automobile.

On connaît par le document FR-A-2 548 609 une telle vis de purge dans laquelle un passage de valve peut être manuellement ouvert ou fermé entre une conduite de pression et une canalisation menant au réservoir de liquide de freinage. Pour des circuits complexes, il faudra donc utiliser autant de telles vis de purge que le circuit comprend de sous-circuits, ce qui accroît le nombre de composants et donc le nombre de risques de fuites, ainsi que le coût du circuit de freinage, tout en rendant complexe l'opération de purge.

On connaît également, par le document DE-A-1 915 461, correspondant au préambule de la revendication 1, un dispositif de purge comportant deux vis de purge imbriquées l'une dans l'autre. Une opération de purge nécessite la manoeuvre successive des deux vis de purge.

L'invention a donc pour but une vis de purge qui soit de conception simple et peu onéreuse, et qui permette la purge de plusieurs circuits simultanément.

Dans ce but, l'invention propose une vis de purge pour circuit hydraulique comprenant dans un corps un premier élément obturateur permettant ou interdisant la communication entre deux sous-circuits, et un second élément obturateur permettant ou interdisant la communication entre au moins l'un des deux sous-circuits avec au moins un troisième sous-circuit.

Selon l'invention, le second élément obturateur coulisse de façon étanche dans un alésage du premier élément obturateur et est chargé par un moyen élastique dans une direction dans laquelle il interdit la communication entre au moins l'un des deux sous-circuits avec le troisième sous-circuit.

L'invention sera mieux comprise et d'autres buts, avantages et caractéristiques apparaîtront plus clairement à la lecture de la description qui suit de modes préférés de réalisation donnés à titre d'exemple non limitatif en référence aux dessins annexés sur lesquels :
- La Figure 1 représente en coupe une vis de purge de l'art antérieur,
- La Figure 2 représente en coupe un premier mode de réalisation d'une vis de purge réalisée conformément à la présente invention,
- La Figure 3 représente en coupe une variante du mode de réalisation de la Figure 2,
- La Figure 4 représente en coupe une deuxième variante de réalisation d'une vis de purge réalisée conformément à la présente invention.

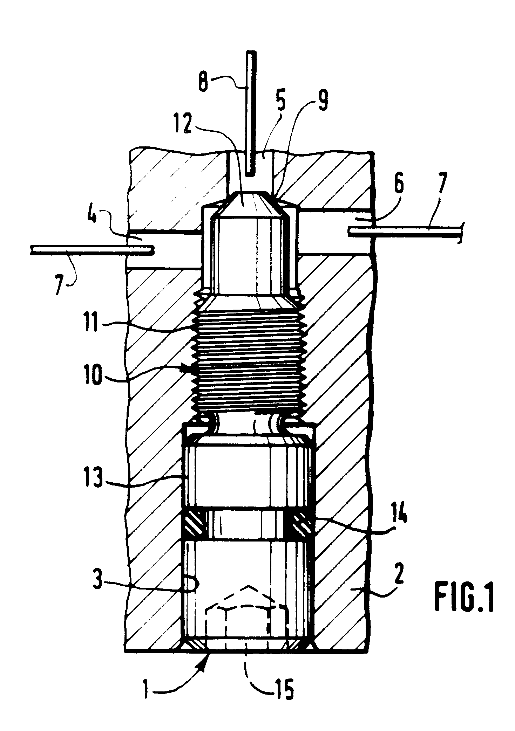

On a représenté sur la Figure 1 en coupe une vis de purge, telle que connue par exemple par le document précité. Cette vis de purge 1 comporte un carter 2 avec un alésage cylindrique 3. Ce carter 2 de la vis de purge 1 dispose de trois raccords 4, 5 et 6. Les raccords 4 et 6 sont hydrauliquement reliés à un circuit 7 reliant des électrovannes (non représentées) à des freins de roues (non représentés), le raccord 5 étant relié à une conduite 8 allant à un réservoir d'alimentation sans pression (non représenté).

L'extrémité supérieure (en considérant la Figure 1) de l'alésage cylindrique 3 est aménagée, à sa transition au raccord 5, en siège de valve 9. Une portion médiane 10 de l'alésage cylindrique 3 est munie d'un filet hélicoïdal dans lequel est agencé un boulon fileté 11 dont l'extrémité supérieure (en considérant la Figure 1) est aménagée en organe obturateur 12 et constitue, en coopération avec le siège 9, un passage de valve obturable, situé entre les conduites 7 et 8.

La portion terminale 13 du boulon fileté 11 éloignée de l'organe obturateur 12 porte un anneau d'étanchéité 14 et présente sur sa face terminale, un six-pans creux 15 dans lequel un outil de vissage approprié peut être introduit, ce qui autorise le réglage manuel du passage de valve 9-12.

On voit donc que la manoeuvre du boulon fileté autorise la purge du circuit 7 relié aux raccords 4 et 6 par la mise en relation de la conduite 7 avec le réservoir d'alimentation sans pression, puis, une fois la purge effectuée, l'isolement de la conduite 7 par rapport à ce réservoir pour permettre le fonctionnement de l'installation de freinage. On conçoit donc bien qu'il est nécessaire d'utiliser une telle vis de purge par circuit ou partie de circuit à purger, avec pour résultat les inconvénients mentionnés plus haut.

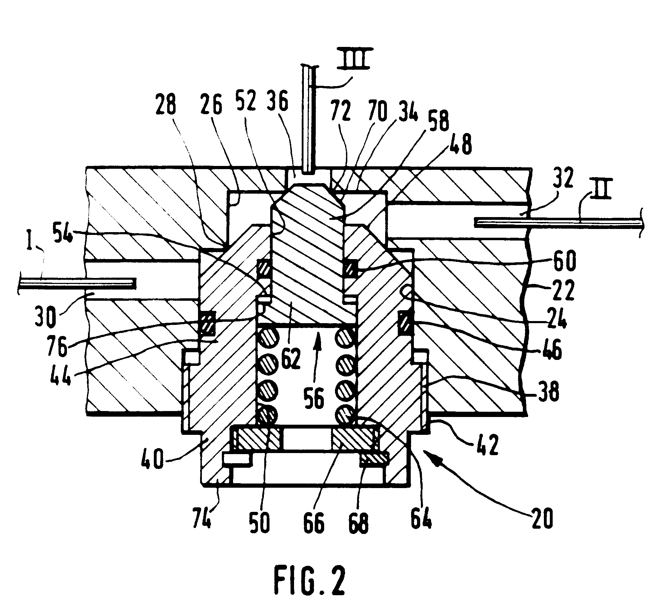

On remédie à ces inconvénients grâce à une vis de purge, réalisée conformément à la présente invention, et dont un mode de réalisation a été représenté sur la Figure 2.

Conformément à la présente invention, la vis de purge 20 comporte un corps 22 muni d'un alésage étagé comportant une portion 24 de plus grand diamètre et une portion 26 de plus petit diamètre, ces deux portions définissant entre elles un épaulement 28.

Dans la portion 24 de plus grand diamètre débouche un perçage 30 formant raccord pour un premier sous-circuit hydraulique I. De même dans la portion 26 de plus petit diamètre débouche un perçage 32 formant raccord pour un second sous-circuit hydraulique II, et dans le fond 34 de la portion 26 de plus petit diamètre de l'alésage étagé débouche un perçage 36 formant raccord pour un sous-circuit hydraulique III menant par exemple à un réservoir d'alimentation sans pression. L'extrémité de la portion 24 de plus grand diamètre de l'alésage étagé débouchant vers l'extérieur du corps 22 est formée avec un taraudage 38.

Dans l'alésage étagé 24, 26 est introduit un bouchon 40 grâce à un filetage 42 formé sur une partie d'une extrémité de celui-ci. Le bouchon 40 possède une partie médiane 44 coopérant de façon étanche grâce à un joint 46 avec la portion 24 de plus grand diamètre de l'alésage étagé, et une partie 48 d'extrémité, opposée à celle qui porte le filetage 42, tronconique, formant une valve avec le siège constitué par l'épaulement 28.

Le bouchon 40 est lui-même formé avec un alésage étagé comportant une portion 50 de plus grand diamètre et une portion 52 de plus petit diamètre définissant entre elles un épaulement 54. Dans l'alésage étagé 50-52 coulisse un piston étagé 56 dont la partie intermédiaire 58 de plus petit diamètre coopère de façon étanche grâce à un joint 60 avec la portion 52 de l'alésage étagé, et dont une partie d'extrémité 62 de plus grand diamètre coulisse dans la portion 50 de l'alésage étagé.

Le piston étagé 56 est sollicité vers l'extérieur du bouchon 40 par un ressort de compression 64 disposé entre la partie d'extrémité 62 du piston 56 et une pièce d'appui 66 disposée dans l'alésage du bouchon 40 et maintenue en place par un circlips 68. Le piston étagé 56 possède également une partie 70 d'extrémité, opposée à la partie 62 de plus grand diamètre et faisant saillie hors du bouchon 40, tronconique, et formant une valve avec le siège de valve 72 formé par la transition entre le fond 34 de l'alésage 24-26 formé dans le corps 22 et le perçage 36.

La vis de purge conforme à l'invention est représentée sur la Figure 2 dans la position qu'elle occupe lors d'un fonctionnement normal du circuit hydraulique sur lequel elle est installée. Pour effectuer une opération de purge du circuit hydraulique, la vis de purge 20 est dévissée, le bouchon 40 étant par exemple conformé sur sa partie 74 saillant hors du corps 22 en écrou à six pans. Ce faisant, le passage de valve entre la partie tronconique 48 du bouchon 40 et le siège 28 formé entre les portions 24 et 26 de l'alésage étagé du corps 22 s'ouvre, permettant la communication entre les raccords 30 et 32, et donc entre les sous-circuits I et II.

Au cours du dévissage du bouchon 40, le piston 56 est toujours sollicité vers l'extérieur du bouchon, si bien qu'au début du dévissage, alors que le passage de valve 28-48 s'ouvre, le passage de valve formé entre la partie tronconique 70 du piston 56 et le siège 72 formé au fond 34 de l'alésage étagé du corps 22 reste fermé. Il le reste jusqu'à ce que l'épaulement 54 entre les portions 50 et 52 de l'alésage du bouchon 40 entre en contact avec l'épaulement 76 formé entre les parties 58 et 62 du piston 56. A ce moment, le passage de valve 70-72 s'ouvre également, mettant ainsi les sous-circuits I et II en communication avec le raccord 36, et donc avec le sous-circuit III.

L'opération de purge, par exemple du type connu sous le nom de purge sous vide, peut alors avoir lieu par l'intermédiaire du sous-circuit III. Le sous-circuit III est d'abord mis sous vide, ce qui entraîne la mise sous vide des sous-circuits I et II, puis du fluide hydraulique sous pression est introduit par le sous-circuit III dans les sous-circuits I et II. Une fois que cette opération a été effectuée et que les sous-circuits I et II ne contiennent plus d'air, la vis de purge 20 peut être revissée.

Au cours du revissage par action sur la partie 74 du bouchon 40, celui-ci pénètre à l'intérieur du corps 22 jusqu'à ce que le piston 56 vienne obturer le passage de valve 70-72. Les sous-circuits I et II sont alors isolés du sous-circuit III. En continuant l'opération de revissage du bouchon 40, le piston 56 reste dans la position d'obturation du raccord 36 qu'il occupait précédemment, tandis que le bouchon 40 continue de pénétrer dans le corps 22, en comprimant le ressort 64, jusqu'à ce qu'il vienne obturer le passage de valve 28-48. Les sous-circuits I et II sont alors isolés l'un de l'autre, et le circuit hydraulique constitué de ces trois sous-circuits peut alors fonctionner normalement.

On voit donc bien qu'on a réalisé une vis de purge qui permet, en une seule opération, d'effectuer la purge de deux circuits distincts, et ce d'une manière particulièrement simple, fiable et peu onéreuse, grâce à deux éléments obturateurs, le bouchon 40 et le piston 56, coopérant chacun avec un siège de valve, 28 et 72 respectivement, formés dans le corps 22.

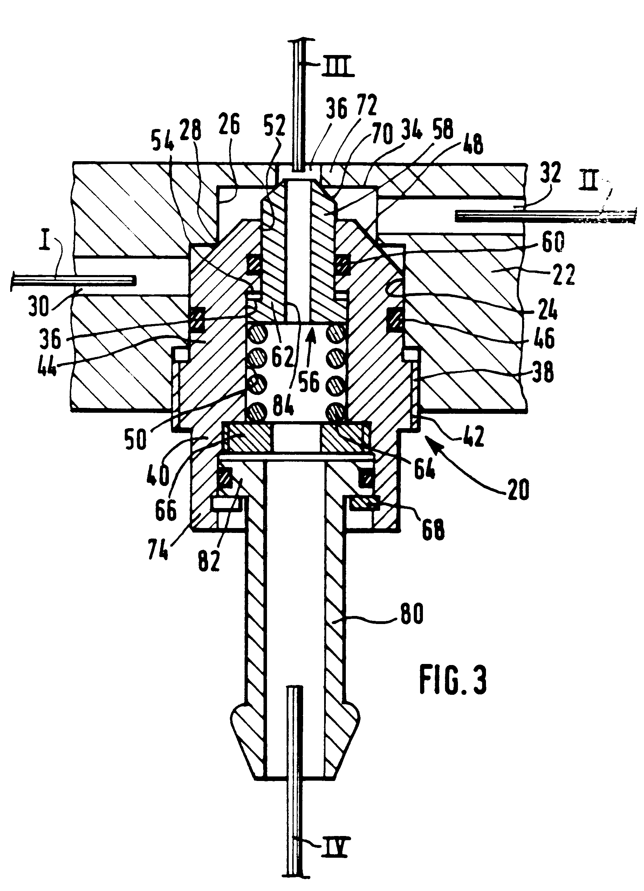

On a représenté sur la Figure 3 une variante du mode de réalisation de la vis de purge représenté sur la Figure 2, dans laquelle la vis de purge permet de plus une liaison constante avec le réservoir d'alimentation sans pression. Sur la Figure 3, les éléments identiques à ceux de la Figure 2 portent les mêmes numéros de référence.

On voit sur la Figure 3 qu'on a disposé un embout 80 sur la vis de purge, cet embout étant destiné à être relié au sous-circuit IV menant au réservoir d'alimentation sans pression.

L'embout 80 possède une base élargie 82 disposée de façon étanche dans l'alésage du bouchon 40, et est immobilisé dans ce dernier entre la pièce d'appui 66 et le circlips 68. D'autre part, un alésage 84 est pratiqué dans le piston 56, et le raccord 36 est relié à un sous-circuit III qui, lors d'un fonctionnement normal de l'installation hydraulique dont est équipée la vis de purge selon l'invention, renvoie du fluide hydraulique au réservoir d'alimentation sans pression par le sous-circuit IV.

Une opération de purge sous vide se déroule ainsi qu'on l'a expliqué en référence à la Figure 2. La vis de purge étant dévissée suffisamment pour que les passages de valve 28-48 et 70-72 soient ouverts, le sous-circuit IV est mis sous vide, ce qui entraîne la mise sous vide des sous-circuits I, II et III. Du fluide hydralique sous pression est alors introduit par le sous-circuit IV dans les sous-circuits I, II et III, puis la vis de purge est revissée. Comme précédemment, lors du revissage de la vis de purge, le passage de valve 70-72 est obturé en premier, isolant ainsi le sous-circuit III des sous-circuits I et II, puis le passage de valve 28-48 est obturé, isolant ainsi les sous-circuits I et II l'un de l'autre, pour permettre un fonctionnement normal de l'installation hydraulique constituée de ces trois sous-circuits.

On voit donc encore qu'on a réalisé grâce à l'invention une vis de purge qui permet, en une seule opération, d'effectuer la purge de trois circuits distincts, et cela d'une manière également simple, fiable et peu onéreuse, grâce à deux éléments obturateurs, le bouchon 40 et le piston 56, coopérant chacun avec un siège de valve, 28 et 72 respectivement, formés dans le corps 22.

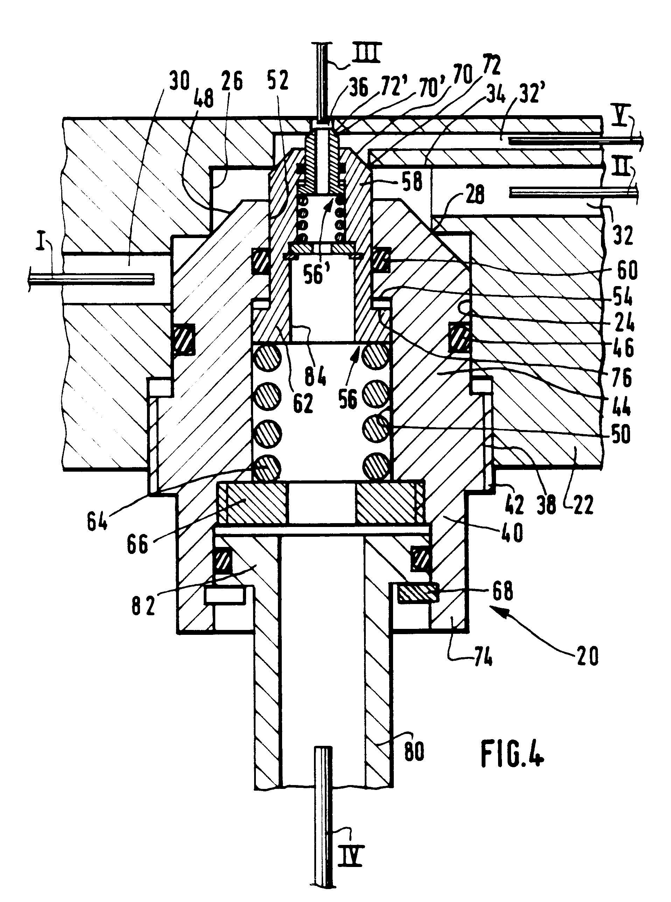

On peut également prévoir d'effectuer en une seule opération, la purge de quatre circuits distincts, en disposant un troisième élément obturateur, comme on l'a représenté sur la Figure 4. Ce troisième élément obturateur est constitué d'un second piston 56' disposé dans le piston 56 de la même manière que ce dernier est disposé dans le bouchon 40, et qu'il n'est donc pas nécessaire de décrire en détail. Le piston 56' coopère avec un troisième siège de valve 72' pour former un passage de valve 70'-72', et un raccord 32' est formé dans le corps 22 entre les sièges de valve 72 et 72' pour un cinquième sous-circuit hydraulique V. Le fonctionnement de ce mode de réalisation se déduira aisément de celui qui a été exposé en relation avec la Figure 2, les passages de valve 70'-72', 70-72 et 28-48 s'obturant dans cet ordre lors d'un revissage de la vis de purge, une fois l'opération de purge sous vide effectuée, pour isoler les sous-circuits I, II, III et V les uns des autres, les sous-circuits III et IV étant communs.

## Revendications

1. Vis de purge pour circuit hydraulique comprenant dans un corps (22) un premier élément obturateur (40) permettant ou interdisant la communication entre deux sous-circuits (I, II), et un second élément obturateur (56) permettant ou interdisant la communication entre au moins l'un des deux sous-circuits (I, II) avec au moins un troisième sous-circuit (III), caractérisé en ce que le second élément obturateur (56) coulisse de façon étanche dans un alésage (50, 52) du premier élément obturateur (40) et est chargé par un moyen élastique (64) dans une direction dans laquelle il interdit la communication entre au moins l'un des deux sous-circuits (I, II) avec le troisième sous-circuit (III).

2. Vis de purge selon la revendication 1, caractérisée en ce que le corps (22) comporte au moins deux sièges de valve (28, 72) coopérant chacun avec un élément obturateur (40, 56).

3. Vis de purge selon la revendication 1, caractérisée en ce que le premier élément obturateur (40) et le second élément obturateur (56) sont percés d'alésages (50, 84) reliant en permanence le troisième sous-circuit (III) à un réservoir d'alimentation sans pression.

4. Vis de purge selon la revendication 3, caractérisée en ce que les alésages (50, 84) pratiqués dans le premier élément obturateur (40) et le second élément obturateur (56) sont coaxiaux.

5. Vis de purge selon l'une quelconque des revendications précédentes, caractérisée en ce qu'elle comporte un troisième élément obturateur (56') permettant ou interdisant la communication entre au moins l'un des trois sous-circuits (I, II, III) avec un cinquième sous-circuit (V).

## Claims

1. Drain plug for a hydraulic circuit, comprising, in a body (22), a first shut-off element (40) permitting or preventing the communication between two subcircuits (I, II), and a second shut-off element (56) permitting or preventing the communication between at least one of the two subcircuits (I, II) with at least a third subcircuit (III), characterized in that the second shut-off element (56) slides in sealing fashion in a bore (50, 52) of the first shut-off element (40) and is loaded by an elastic means (64) in a direction in which it prevents the communication between at least one of the two subcircuits (I, II) with the third subcircuit (III).

2. Drain plug according to claim 1, characterized in that the body (22) comprises at least two valve seats (28, 72), each interacting with a shut-off element (40, 56).

3. Drain plug according to claim 1, characterized in that the first shut-off element (40) and the second shut-off element (56) are pierced with bores (50, 84) permanently connecting the third subcircuit (III) to an unpressurized supply reservoir.

4. Drain plug according to claim 3, characterized in that the bores (50, 84) made in the first shut-off element (40) and the second shut-off element (56) are coaxial.

5. Drain plug according to any one of the preceding claims, characterized in that it comprises a third shut-off element (56') permitting or preventing the communication between at least one of the three subcircuits (I, II, III) with a fifth subcircuit (V).

## Patentansprüche

1. Entlüftungsschraube für einen Hydraulikkreis, die in einem Körper (22) ein erstes Verschlußelement (40) enthält, das die Verbindung zwischen zwei Nebenkreisen (I, II) ermöglicht oder sperrt, sowie ein zweites Verschlußelement (56), das die Verbindung zwischen wenigstens einem der beiden Nebenkreise (I, II) und wenigstens einem dritten Nebenkreis (III) ermöglicht oder sperrt, dadurch gekennzeichnet, daß das zweite Verschlußelement (56) in dichter Weise in einer Bohrung (50, 52) des ersten Verschlußelementes (40) gleitet und von einem Elastikmittel (64) in einer Richtung beaufschlagt ist, in der es die Verbindung zwischen wenigstens einem der beiden Nebenkreise (I, II) und dem dritten Nebenkreis (III) sperrt.

2. Entlüftungsschraube nach Anspruch 1, dadurch gekennzeichnet, daß der Körper (22) wenigstens zwei Ventilsitze (28, 72) enthält, die jeweils mit einem Verschlußelement (40, 56) zusammenwirken.

3. Entlüftungsschraube nach Anspruch 1, dadurch gekennzeichnet, daß das erste Verschlußelement (40) und das zweite Verschlußelement (56) von Bohrungen (50, 84) durchsetzt sind, die permanent den dritten Nebenkreis (III) mit einem drucklosen Versorgungsvorratsbehälter verbinden.

4. Entlüftungsschraube nach Anspruch 3, dadurch gekennzeichnet, daß die in dem ersten Verschlußelement (40) und dem zweiten Verschlußelement (56) ausgebildeten Bohrungen (50, 84) koaxial sind.

5. Entlüftungsschraube nach einem der vorangehenden Ansprüche, dadurch gekennzeichnet, daß sie ein drittes Verschlußelement (56') enthält, das die Verbindung zwischen wenigstens einem der drei Nebenkreise (I, II, III) und einem fünften Nebenkreis (V) ermöglicht oder sperrt.
